# EUROPEAN PATENT APPLICATION

(11) **EP 4 794 398 A1**
(43) Date of publication of application: **19.08.2026**
(21) Application number: 26155921.5
(22) Date of filing: 03.02.2026
(51) Int. Cl.: H04W 48/16, H04W 84/12

(54) **FACILITATING WI-FI AP DISCOVERY IN THE 6 GHZ RADIO FREQUENCY BAND**

(30) Priority: 13.02.2025 US 202519053224
(71) Applicant: Arista Networks, Inc., Santa Clara, CA 95054 (US)
(72) Inventor: Balasubramanian, Karthikeyan, Bangalore (IN); Shanmugavadivel, Senthilraj, Bengaluru (IN); Bhatt, Avinash, Bengaluru (IN); Patkar, Rakshith Suresh, Bengaluru (IN)
(74) Representative: Hoffmann Eitle

(57) **Abstract**

Techniques for facilitating the discovery of Wi-Fi access points (APs) operating on 6 GHz channels that are not Preferred Scan Channels (PSCs), referred to herein as non-PSCs, are provided. Among other advantages, these techniques make high density Wi-Fi 6E/7 deployments feasible because the Wi-Fi APs in such deployments can employ the full range of channels (i.e., both PSCs and non-PSCs) in the 6 GHz radio frequency band.

## Description

### BACKGROUND

Wi-Fi is a wireless networking technology that has evolved over several versions and is defined in a set of IEEE (Institute of Electrical and Electronics Engineers) standards known as the 802.11x standards. Wi-Fi clients and access points (APs) that implement the most recent versions of this technology-namely, Wi-Fi 7 and Wi-Fi 6E-are capable of operating on, and thus communicating over, three separate radio frequency (RF) bands: 6 gigahertz (GHz), 5 GHz, and 2.4 GHz. Wi-Fi clients and APs that implement earlier versions of Wi-Fi (e.g., Wi-Fi 6, Wi-Fi 5, and so on) are limited to operating on the 5 GHz and/or 2.4 GHz RF bands.

The typical mechanism by which a Wi-Fi client discovers Wi-Fi APs that are operating on a particular RF band (hereinafter simply "band") is called in-band discovery. This mechanism generally involves actively and/or passively scanning the band's channels. However, for efficiency reasons, in-band discovery is currently restricted in the 6 GHz context. In particular, in-band discovery can only be used to discover Wi-Fi APs that operate on a small, predefined subset of channels (referred to as Preferred Scan Channels (PSCs)) in the 6 GHz band, rather than all channels in that band.

### BRIEF DESCRIPTION OF THE DRAWINGS

With respect to the discussion to follow and in particular to the drawings, it is stressed that the particulars shown represent examples for purposes of illustrative discussion and are presented in the cause of providing a description of principles and conceptual aspects of the present disclosure. In this regard, no attempt is made to show implementation details beyond what is needed for a fundamental understanding of the present disclosure. The discussion to follow, in conjunction with the drawings, makes apparent to those of skill in the art how embodiments in accordance with the present disclosure may be practiced. Similar or same reference numbers may be used to identify or otherwise refer to similar or same elements in the various drawings and supporting descriptions. In the accompanying drawings:
FIG. 1 depicts an example Wi-Fi deployment in accordance with certain embodiments of the present disclosure.
FIG. 2 depicts an example Wi-Fi AP in accordance with certain embodiments of the present disclosure.
FIG. 3 depicts a discovery workflow in accordance with certain embodiments of the present disclosure.

### DETAILED DESCRIPTION

In the following description, for purposes of explanation, numerous examples and details are set forth in order to provide an understanding of embodiments of the present disclosure. Particular embodiments as expressed in the claims may include some or all of the features in these examples, alone or in combination with other features described below, and may further include modifications and equivalents of the features and concepts described herein.

Embodiments of the present disclosure are directed to techniques that facilitate the discovery of Wi-Fi APs operating on 6 GHz channels that are not PSCs, referred to herein as non-PSCs. Among other advantages, these techniques make high density Wi-Fi 6E/7 deployments feasible because the Wi-Fi APs in such deployments can employ the full range of channels (i.e., both PSCs and non-PSCs) in the 6 GHz band.

### 1. Example Wi-Fi Deployment and Wi-Fi AP

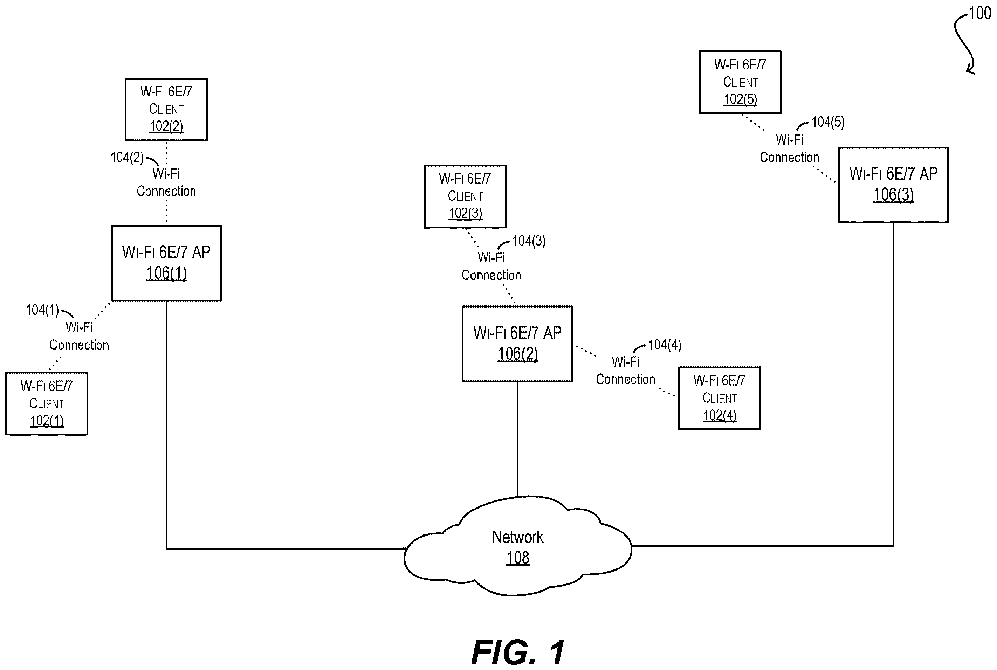

FIG. 1 is a simplified block diagram of an example Wi-Fi deployment 100 in which the techniques of the present disclosure may be implemented. As shown, Wi-Fi deployment 100 includes a plurality of Wi-Fi 6E/7 clients 102(1)-(5) that are coupled via corresponding wireless (Wi-Fi) connections 104(1)-(5) to a plurality of Wi-Fi 6E/7 APs 106(1)-(3). Wi-Fi 6E/7 APs 106(1)-(3) are in turn coupled via wired (e.g., Ethernet) connections to a network 108. Generally speaking, Wi-Fi 6E/7 APs 106(1)-(3) serve as a bridge between Wi-Fi 6E/7 clients 102(1)-(5) and network 108, thereby enabling the clients to communicate wirelessly with the network (and with each other).

Because the clients and APs in Wi-Fi deployment 100 are Wi-Fi 6E/7 devices, they can operate on any one or more of the 6 GHz, 5 GHz, and 2.4 GHz bands defined in the Wi-Fi 6E and 7 standards. In contrast, Wi-Fi devices that only support earlier Wi-Fi versions are limited to operating on the 5 GHz and/or 2.4 GHz bands.

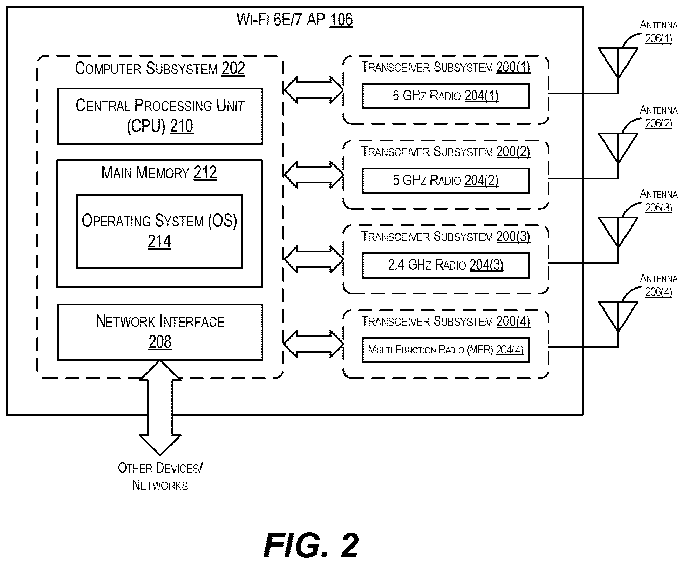

FIG. 2 is a simplified block diagram illustrating the architecture of each Wi-Fi 6E/7 AP 106 of FIG. 1 according to certain embodiments. As shown in FIG. 2, Wi-Fi 6E/7 AP 106 comprises a set of transceiver subsystems 200(1)-(4) that are communicatively coupled with a computer subsystem 202.

Each transceiver subsystem 200 of Wi-Fi 6E/7 AP 106 includes, among other things, a radio 204 that transmits and receives RF signals via a corresponding antenna 206. In transceiver subsystems 200(1) through 200(3), radio 204 supports one of the three bands mentioned previously (6 GHz, 5 GHz, and 2.4 GHz) and is configured to operate on one or more channels (or in other words, RF ranges) within that band, thereby enabling Wi-Fi communication between Wi-Fi 6E/7 AP 106 and other Wi-Fi devices. For example, transceiver subsystem 200(1) has a 6 GHz radio 204(1) that is configured to operate on one or more channels in the 6 GHz band (thereby enabling communication with 6 GHz clients/APs), transceiver subsystem 200(2) has a 5 GHz radio 204(2) that is configured to operate on one or more channels in the 5 GHz band (thereby enabling communication with 5 GHz clients/APs), and transceiver subsystem 200(3) has a 2.4 GHz radio 204(3) that is configured to operate on one or more channels in the 2.4 GHz band (thereby enabling communication with 2.4 GHz clients/APs).

Transceiver subsystem 200(4) has a special type of radio 204(4), known as a multi-function radio (MFR), that is different from radios 204(1)-(3) in that it is designed to perform various functions beyond providing standard Wi-Fi connectivity. Examples of such functions include channel scanning, wireless intrusion detection, and network health monitoring. To carry out these functions, MFR 204(4) is capable of dynamically switching its operation between the 6 GHz, 5 GHz, and 2.4 GHz bands.

Computer subsystem 202 of Wi-Fi 6E/7 AP 106 includes, among other things, a network interface 208, a central processing unit (CPU) 210, and a main memory (e.g., random-access memory or RAM) 212. Network interface 208 connects Wi-Fi 6E/7 AP 106 to a wired network, typically through one or more Ethernet ports. CPU 210 is a general purpose processor that is responsible for managing the configuration and operation of Wi-Fi 6E/7AP 106 and its constituent components, including transceiver subsystems 200(1)-(4). CPU 210 performs these tasks under the direction of an operating system 214 that runs on CPU 210 from main memory 212.

### 2. In-Band Discovery

As noted in the Background section, Wi-Fi clients typically discover Wi-Fi APs operating on a particular band via in-band discovery, which involves performing active or passive scanning of the channels in that band.

### 2.1 Active scanning

A Wi-Fi client carries out active scanning on a band B by sending out a probe request on each of a set of channels in B (referred to as the actively scanned channels) and waiting for probe response(s) from Wi-Fi APs operating on each channel. A probe response received from a Wi-Fi AP A in response to this probe request includes information usable by the Wi-Fi client for joining a Service Set Identifier (SSID) (or in other words, Wi-Fi network) of A that is mapped to band B. The typical amount of time the Wi-Fi client waits for probe responses on each channel is approximately 10 to 20 milliseconds (ms), resulting in a total active scan time of around 20 ms × (the number of actively scanned channels).

For the 5 GHz and 2.4 GHz bands, the set of actively scanned channels includes all of the band's 20 megahertz (MHz) channels. However, because the 6 GHz band includes significantly more 20 MHz channels than the 2.4 and 5 GHz bands (59 channels in total), the set of actively scanned channels in the 6 GHz band is restricted to a predefined subset of fifteen 20 MHz channels, known as PSCs. This restriction ensures that the total active scan time incurred by the Wi-Fi client on the 6 GHz band is kept below a reasonable threshold.

### 2.2 Passive scanning

A Wi-Fi client carries out passive scanning on a band B by listening for beacon frames on each of a set of channels in B (referred to as the passively scanned channels). This beacon frame is periodically broadcast by Wi-Fi APs on the channel they are operating on and includes information usable by the client for joining an SSID of the AP mapped to band B. The default beacon broadcast interval is 100 ms, which means that the total passive scan time is approximately 100 ms × (the number of passively scanned channels). Some Wi-Fi APs employ a special type of short beacon frame in the 6 GHz band, known as a Fast Initial Link Setup (FILS) frame, that is broadcast at a faster interval of 20 ms, resulting in a reduced total passive scan time of approximately 20 ms × (the number of passively scanned channels). Further, some Wi-Fi APs also broadcast unsolicited probe responses (UPRs) every 20 ms (or some other interval) to assist with the passive scanning process. These UPRs are similar in content to beacon frames.

For the 5 GHz and 2.4 GHz bands, the set of passively scanned channels includes all of the band's 20 MHz channels. However, like active scanning, this set is restricted to the fifteen PSCs in the 6 GHz band in order to keep the total passive scan time in that band below a reasonable threshold.

### 2.3 6 GHz in-band discovery issues

Because the 6 GHz band is newer and usually less congested than the 5 GHz and 2.4 GHz bands, the preferred practice is for Wi-Fi 6E/7 APs to map their SSIDs to the 6 GHz band alone. This ensures that Wi-Fi 6E/7 clients will connect to the APs using the 6 GHz band rather than the 5 GHz or 2.4 GHz bands. However, if such an AP is configured to operate on a non-PSC in the 6 GHz band, Wi-Fi clients will not be able to discover the AP's 6 GHz SSID via in-band discovery because the clients will only perform active/passing scanning on the PSCs as described above. This forces existing Wi-Fi 6E/7 APs to operate on one of the fifteen PSCs in the 6 GHz band, which is problematic in high density Wi-Fi deployments where having access to only fifteen distinct 20 MHz channels can lead to co-channel interference and degraded Wi-Fi performance (particularly when the APs operate using higher bandwidth channels that aggregate multiple 20 MHz channels).

A workaround for this problem is for a Wi-Fi 6E/7 AP to map its SSID to a combination of the 6 GHz, 5 GHz, and 2.4 GHz bands, rather than solely to the 6 GHz band. This allows Wi-Fi clients to learn that the AP is operating on a non-PSC in the 6 GHz band for that SSID via an out-of-band discovery mechanism (which involves receiving beacon frames on the 5 GHz or 2.4 GHz band that includes a Reduced Neighbor Report Information Element (RNR IE) identifying the non-PSC). However, this workaround can potentially cause the Wi-Fi clients to join the SSID via the 5 GHz or 2.4 GHz band, which is not desirable as noted previously.

### 3. Solution Overview

To address the foregoing and other similar issues, embodiments of the present disclosure provide techniques for facilitating the discovery of Wi-Fi APs operating in the 6 GHz band, and more specifically for enabling a Wi-Fi 6E/7 client (like clients 102(1)-(5) of FIG. 1) to discover and join a SSID of a Wi-Fi 6E/7 AP (like APs 106(1)-(3) of FIG. 1) in a scenario where (1) the SSID is mapped solely to the 6 GHz band (or in other words, is a 6 GHz SSID), and (2) the AP is operating on a non-PSC in the 6 GHz band.

At a high level, these techniques involve leveraging the Wi-Fi 6E/7 AP's MFR to send, over the 5 GHz or 2.4 GHz band, 6 GHz discovery information to the Wi-Fi 6E/7 client that includes, among other things, the non-PSC used by the AP for serving the 6 GHz SSID. In certain embodiments, this information can be provided within the RNR IE of regular or unsolicited probe responses or short beacon frames (e.g., FILS frames). The AP's MFR is used for this purpose because it is not possible for the AP's dedicated 5 GHz or 2.4 GHz radio to send out probe responses/beacon frames pertaining to a SSID that is not mapped to the 5 GHz or 2.4 GHz band. Upon receiving the 6 GHz discovery information, the Wi-Fi 6E/7 client can discover the AP's 6 GHz SSID (including its associated non-PSC) and can join the SSID on that non-PSC in the 6 GHz band.

With this general approach, several benefits are achieved. First, because Wi-Fi 6E/7 clients are enabled to discover Wi-Fi 6E/7 APs that operate on non-PSCs in the 6 GHz band, such APs can employ the full range of channels in the 6 GHz band and thus can be feasibly deployed in high density Wi-Fi 6E/7 deployments (due to reduced likelihood of co-channel interference issues). Second, because these techniques do not require Wi-Fi 6E/7 APs to map their SSIDs to all three of the 6 GHz, 5 GHz, and 2.4 GHz bands (instead, the SSIDs need only be mapped to the 6 GHz band), undesirable client roaming to the 5 GHz and 2.4 GHz bands can be avoided.

It should be appreciated that FIGS. 1 and 2 and the foregoing high-level solution description are illustrative and not intended to limit embodiments of the present disclosure. For example, although FIG. 2 depicts a particular arrangement of components in Wi-Fi AP 106, other arrangements are possible (e.g., the functionality attributed to a particular component may be split among multiple components, components may be combined, and so on).

Further, although the solution is described in the context of Wi-Fi 6E/7 clients and APs, this is because Wi-Fi 6E and Wi-Fi 7 are currently the only Wi-Fi versions that support operation in the 6 GHz band. One of ordinary skill in the art will appreciate that the techniques of the present disclosure may be also applied to any future Wi-Fi versions that support the 6 GHz band like Wi-Fi 6E/7.

### 4. Discovery Workflow

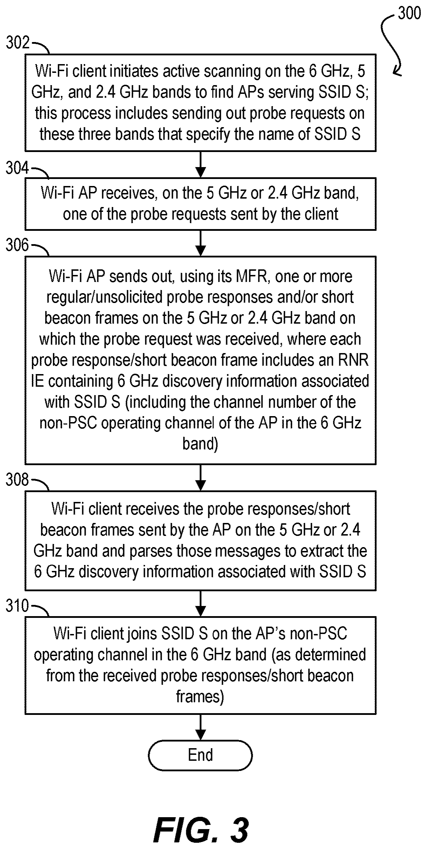

FIG. 3 depicts a workflow 300 that may be executed by a Wi-Fi 6E/7 client and a Wi-Fi 6E/7 AP for enabling the client to discover and join an SSID S of the AP according to certain embodiments. Workflow 300 may be implemented in software, hardware, or a combination thereof. In the case of software, workflow 300 may be embodied in program code that is executable by one or more processors (e.g., central processing units (CPUs)) of the Wi-Fi 6E/7 client and the Wi-Fi 6E/7 AP.

Workflow 300 assumes that SSID S is a 6 GHz SSID mapped solely to the 6 GHz band and that the Wi-Fi 6E/7 AP is operating on a non-PSC in the 6 GHz band. In addition, workflow 300 assumes that the Wi-Fi 6E/7 AP is also operating on the 5 GHz and 2.4 GHz bands (and may have other SSIDs mapped to those bands).

Starting with step 302, the Wi-Fi 6E/7 client can initiate active scanning on the 6 GHz, 5 GHz, and 2.4 GHz bands in order to find nearby APs serving SSID S. As part of this step, the client can send out probe requests on these three bands that specify the name of SSID S.

At step 304, the Wi-Fi 6E/7 AP can receive, on the 5 GHz or 2.4 GHz band, one of the probe requests sent by the Wi-Fi 6E/7 client. Note that the Wi-Fi 6E/7 AP will not receive any probe requests on the 6 GHz band because the AP is operating on a non-PSC and the Wi-Fi 6E/7 client will only send out probe requests on PSCs in that band.

In response to receiving the probe request, the Wi-Fi 6E/7 AP can send out, using its MFR, one or more probe responses (e.g., regular or unsolicited) and/or short beacon frames (e.g., FILS frames) on the 5 GHz or 2.4 GHz band on which the probe request was received, where each probe response/short beacon frame includes an RNR IE containing 6 GHz discovery information pertaining to SSID S (step 306). For example, in one set of embodiments the RNR IE can contain a neighbor AP entry for SSID S that specifies the channel number of the non-PSC operating channel of the AP in the 6 GHz band, the BSSID (i.e., Media Access Control (MAC) address) of the 6 GHz radio serving SSID S, the operating class, and the shortened SSID name for SSID S.

As mentioned previously, the Wi-Fi 6E/7 AP sends out the probe responses/short beacon frames via its MFR at step 306 because SSID S is solely mapped to the 6 GHz band and the AP cannot transmit probe responses/short beacon frames that pertain to such a 6 GHz SSID via its dedicated 5 GHz or 2.4 GHz radio.

At step 308, the Wi-Fi 6E/7 client can receive the probe responses and/or short beacon frames sent by the Wi-Fi 6E/7 AP and can parse those messages to extract the 6 GHz discovery information associated with SSID S, including the AP's non-PSC operating channel in the 6 GHz band. In the case of regular probe responses, the Wi-Fi 6E/7 client will typically receive and parse the responses as part of the normal active scanning process. In the case of short beacon frames or UPRs, the Wi-Fi 6E/7 client will typically receive and parse the beacon frames/responses as part of passive scanning processes performed by the client on the 5 GHz and 2.4 GHz bands.

Finally, at step 310, the Wi-Fi 6E/7 client can join SSID S on the AP's non-PSC operating channel in the 6 GHz band (as determined from the received probe responses/short beacon frames) and workflow 300 can end.

The above description illustrates various embodiments of the present disclosure along with examples of how aspects of these embodiments may be implemented. The above examples and embodiments should not be deemed to be the only embodiments and are presented to illustrate the flexibility and advantages of the present disclosure as defined by the following claims. For example, although certain embodiments have been described with respect to particular workflows and steps, it should be apparent to those skilled in the art that the scope of the present disclosure is not strictly limited to the described workflows and steps. Steps described as sequential may be executed in parallel, order of steps may be varied, and steps may be modified, combined, added, or omitted. As another example, although certain embodiments may have been described using a particular combination of hardware and software, it should be recognized that other combinations of hardware and software are possible, and that specific operations described as being implemented in hardware can also be implemented in software and vice versa.

The disclosure in the application also includes the following numbered clauses:
1. A method performed by a Wi-Fi access point (AP), the method comprising:
   receiving, from a Wi-Fi client, a probe request on a channel in a 5 gigahertz (GHz) or 2.4 GHz frequency band, the probe request identifying a service set identifier (SSID) of the Wi-Fi AP that is mapped solely to a 6 GHz frequency band; and
   in response to receiving the probe request, transmitting one or more probe responses or one or more short beacon frames on the channel using a multi-function radio (MFR) of the Wi-Fi AP, each of the one or more probe responses or one or more short beacon frames including a Reduced Neighbor Report Information Element (RNR IE) specifying a channel number of an operating channel of the Wi-Fi AP in the 6 GHz frequency band.
2. The method of clause 1 wherein the 6 GHz frequency band comprises a plurality of Preferred Scanning Channels (PSCs) and a plurality of non-PSCs, and wherein the operating channel of the Wi-Fi AP in the 6 GHz frequency band is a non-PSC.
3. The method of any preceding clause wherein the one or more probe responses include a regular probe response or an unsolicited probe response (UPR).
4. The method of any preceding clause wherein the one or more short beacon frames include a Fast Initial Link Setup (FILS) frame.
5. The method of any preceding clause wherein the RNR IE further specifies a Media Access Control (MAC) address associated with the SSID, an operating class, and a shortened version of the SSID.
6. The method of any preceding clause wherein upon receiving a probe response or a short beacon frame on the channel from the Wi-Fi AP, the Wi-Fi client:
   parses the RNR IE of the probe response or the short beacon frame to determine the operating channel of the Wi-Fi AP in the 6 GHz frequency band; and
   joins the SSID on the determined operating channel.
7. The method of any preceding clause wherein the Wi-Fi client sends the probe request on the channel in the 5 GHz or 2.4 GHz frequency band as part of an active scanning process that involves sending probe requests to the Wi-Fi AP on PSCs in the 6 GHz frequency band.
8. The method of clause 7 wherein the Wi-Fi AP does not receive the probe requests sent on the PSCs in the 6 GHz frequency band.
9. The method of any preceding clause wherein the Wi-Fi client is a Wi-Fi 6E or 7 client and wherein the Wi-Fi AP is a Wi-Fi 6E or 7 AP.
10. A Wi-Fi access point (AP) comprising:
   a multi-function radio (MFR);
   a processor; and
   a memory having stored thereon program code that, when executed by the processor, causes the processor to:
      receive, from a Wi-Fi client, a probe request on a channel in a 5 gigahertz (GHz) or 2.4 GHz frequency band, the probe request identifying a service set identifier (SSID) of the Wi-Fi AP that is mapped solely to a 6 GHz frequency band; and
      in response to receiving the probe request, transmit one or more probe responses or one or more short beacon frames on the channel using the MFR, each of the one or more probe responses or one or more short beacon frames including a Reduced Neighbor Report Information Element (RNR IE) specifying a channel number of an operating channel of the Wi-Fi AP in the 6 GHz frequency band.
11. The Wi-Fi AP of clause 10 wherein the 6 GHz frequency band comprises a plurality of Preferred Scanning Channels (PSCs) and a plurality of non-PSCs, and wherein the operating channel of the Wi-Fi AP in the 6 GHz frequency band is a non-PSC.
12. The Wi-Fi AP of clause 10 or 11 wherein the one or more probe responses include a regular probe response or an unsolicited probe response (UPR).
13. The Wi-Fi AP of any of clauses 10 to 12 wherein the one or more short beacon frames include a Fast Initial Link Setup (FILS) frame.
14. The Wi-Fi AP of any of clauses 10 to 13 wherein the RNR IE further specifies a Media Access Control (MAC) address associated with the SSID, an operating class, and a shortened version of the SSID.
15. The Wi-Fi AP of any of clauses 10 to 14 wherein upon receiving a probe response or a short beacon frame on the channel from the Wi-Fi AP, the Wi-Fi client:
   parses the RNR IE of the probe response or the short beacon frame to determine the operating channel of the Wi-Fi AP in the 6 GHz frequency band; and
   joins the SSID on the determined operating channel.
16. The Wi-Fi AP of any of clauses 10 to 15 wherein the Wi-Fi client sends the probe request on the channel in the 5 GHz or 2.4 GHz frequency band as part of an active scanning process that involves sending probe requests to the Wi-Fi AP on PSCs in the 6 GHz frequency band.
17. The Wi-Fi AP of clause 16 wherein the Wi-Fi AP does not receive the probe requests sent on the PSCs in the 6 GHz frequency band.
18. The Wi-Fi AP of any of clauses 10 to 17 wherein the Wi-Fi client is a Wi-Fi 6E or 7 client and wherein the Wi-Fi AP is a Wi-Fi 6E or 7 AP.
19. A method performed by a Wi-Fi access point (AP), the method comprising:
   receiving, from a Wi-Fi client, a first message on a channel in a 5 gigahertz (GHz) or 2.4 GHz frequency band, the first message identifying a service set identifier (SSID) of the Wi-Fi AP that is mapped solely to a 6 GHz frequency band; and
   in response to receiving the first message, transmitting one or more second messages on the channel using a multi-function radio (MFR) of the Wi-Fi AP, each of the one or more second messages including 6 GHz discovery information associated with the SSID.
20. The method of clause 19 wherein the 6 GHz discovery information identifies a non-Preferred Scanning Channel (PSC) in the 6 GHz frequency band on which the Wi-Fi AP is operating.

The specification and drawings are, accordingly, to be regarded in an illustrative rather than restrictive sense. Other arrangements, embodiments, implementations, and equivalents will be evident to those skilled in the art and may be employed without departing from the spirit and scope of the present disclosure as set forth in the following claims.

## Claims

1. A method performed by a Wi-Fi access point (AP), the method comprising:
receiving, from a Wi-Fi client, a probe request on a channel in a 5 gigahertz (GHz) or 2.4 GHz frequency band, the probe request identifying a service set identifier (SSID) of the Wi-Fi AP that is mapped solely to a 6 GHz frequency band; and
in response to receiving the probe request, transmitting one or more probe responses or one or more short beacon frames on the channel using a multi-function radio (MFR) of the Wi-Fi AP, each of the one or more probe responses or one or more short beacon frames including a Reduced Neighbor Report Information Element (RNR IE) specifying a channel number of an operating channel of the Wi-Fi AP in the 6 GHz frequency band.

2. The method of claim 1 wherein the 6 GHz frequency band comprises a plurality of Preferred Scanning Channels (PSCs) and a plurality of non-PSCs, and wherein the operating channel of the Wi-Fi AP in the 6 GHz frequency band is a non-PSC.

3. The method of any preceding claim wherein the one or more probe responses include a regular probe response or an unsolicited probe response (UPR).

4. The method of any preceding claim wherein the one or more short beacon frames include a Fast Initial Link Setup (FILS) frame.

5. The method of any preceding claim wherein the RNR IE further specifies a Media Access Control (MAC) address associated with the SSID, an operating class, and a shortened version of the SSID.

6. The method of any preceding claim wherein upon receiving a probe response or a short beacon frame on the channel from the Wi-Fi AP, the Wi-Fi client:
parses the RNR IE of the probe response or the short beacon frame to determine the operating channel of the Wi-Fi AP in the 6 GHz frequency band; and
joins the SSID on the determined operating channel.

7. The method of any preceding claim wherein:
the Wi-Fi client sends the probe request on the channel in the 5 GHz or 2.4 GHz frequency band as part of an active scanning process that involves sending probe requests to the Wi-Fi AP on PSCs in the 6 GHz frequency band;
any optionally wherein the Wi-Fi AP does not receive the probe requests sent on the PSCs in the 6 GHz frequency band.

8. The method of any preceding claim wherein the Wi-Fi client is a Wi-Fi 6E or 7 client and wherein the Wi-Fi AP is a Wi-Fi 6E or 7 AP.

9. A Wi-Fi access point (AP) comprising:
a multi-function radio (MFR);
a processor; and
a memory having stored thereon program code that, when executed by the processor, causes the processor to:
receive, from a Wi-Fi client, a probe request on a channel in a 5 gigahertz (GHz) or 2.4 GHz frequency band, the probe request identifying a service set identifier (SSID) of the Wi-Fi AP that is mapped solely to a 6 GHz frequency band; and
in response to receiving the probe request, transmit one or more probe responses or one or more short beacon frames on the channel using the MFR, each of the one or more probe responses or one or more short beacon frames including a Reduced Neighbor Report Information Element (RNR IE) specifying a channel number of an operating channel of the Wi-Fi AP in the 6 GHz frequency band.

10. The Wi-Fi AP of claim 9 wherein the 6 GHz frequency band comprises a plurality of Preferred Scanning Channels (PSCs) and a plurality of non-PSCs, and wherein the operating channel of the Wi-Fi AP in the 6 GHz frequency band is a non-PSC.

11. The Wi-Fi AP of claim 9 or claim 10 wherein the one or more probe responses include a regular probe response or an unsolicited probe response (UPR).

12. The Wi-Fi AP of any of claims 9 to 11 wherein the one or more short beacon frames include a Fast Initial Link Setup (FILS) frame.

13. The Wi-Fi AP of any of claims 9 to 12 wherein the RNR IE further specifies a Media Access Control (MAC) address associated with the SSID, an operating class, and a shortened version of the SSID.

14. The Wi-Fi AP of any of claims 9 to 13 wherein:
the Wi-Fi client sends the probe request on the channel in the 5 GHz or 2.4 GHz frequency band as part of an active scanning process that involves sending probe requests to the Wi-Fi AP on PSCs in the 6 GHz frequency band;
any optionally wherein the Wi-Fi AP does not receive the probe requests sent on the PSCs in the 6 GHz frequency band.

15. The Wi-Fi AP of any of claims 9 to 14 wherein the Wi-Fi client is a Wi-Fi 6E or 7 client and wherein the Wi-Fi AP is a Wi-Fi 6E or 7 AP.
